Europäisches Patentamt

European Patent Office

Office européen des brevets

(19)

(11) Numéro de publication : **0 352 210 B1**

(12) # FASCICULE DE BREVET EUROPEEN

(45) Date de publication du fascicule du brevet :
**21.09.94 Bulletin 94/38**

(51) Int. Cl.⁵ : **H04N 7/10, H04N 7/18**

(21) Numéro de dépôt : **89460022.0**

(22) Date de dépôt : **18.07.89**

(54) **Réseau domotique câblé multipoints reconfigurable de distribution simultanée et/ou alternative de plusieurs types de signaux, notamment des signaux d'images en bande de base, et procédé de reconfiguration d'un tel réseau.**

(30) Priorité : **22.07.88 FR 8810101**

(43) Date de publication de la demande :
**24.01.90 Bulletin 90/04**

(45) Mention de la délivrance du brevet :
**21.09.94 Bulletin 94/38**

(84) Etats contractants désignés :
**DE GB NL**

(56) Documents cités :
**EP-A- 0 074 865**
**EP-A- 0 084 628**
**FR-A- 2 589 660**
**FR-A- 2 597 688**
**US-A- 3 693 090**
**US-A- 3 993 955**
**US-A- 4 677 467**
**GRUNDIG TECHNISCHE INFORMATIONEN, vol. 22, no. 3, 1987, pages 566-572 E. BEEKMANN: "Allgemeine praxisbezogene Betrachtung über die videofrequente Signalü- bertragung"**
**IEEE TRANSACTIONS ON CONSUMER ELEC- TRONICS, vol. CE-31, no. 3, aòut 1985, pages 516-525, IEEE, New York, US; M. INQUE et al.: "A home automation system"**
**PATENT ABSTRACTS OF JAPAN, vol. 9, no. 165, E 327, 10.07.1985 & JP-A-60 038 999 (TOS- HIBA K.K.)**

(56) Documents cités :
**PATENT ABSTRACTS OF JAPAN, vol. 11, no. 17, E 471, 17.01.1987 & JP-A-61 187 448 (NEC CORP.)**
**PROCEEDINGS OF THE NAT. ELECTR: CONFERENCE, vol. 28, 6-10 octobre 1973, pages 229-233; R.K. STEVENS et al.: " Design of a switched broadband cable communica- tions system"**

(73) Titulaire : **FRANCE TELECOM**
**6, Place d'Alleray**
**F-75015 Paris (FR)**
Titulaire : **TELEDIFFUSION DE FRANCE S.A.**
**21-25, rue Barbès,**
**B.P. 518**
**F-92542 Montrouge Cédex (FR)**

(72) Inventeur : **Bordry, Hervé**
**13 rue Papu**
**F-35000 Rennes (FR)**
Inventeur : **Bottin, Daniel**
**Tayée, St-Aubin du Pavail**
**F-35410 Chateaugirob (FR)**
Inventeur : **Pace, Daniel**
**22 square Marcel Bouget**
**F-35700 Rennes (FR)**

(74) Mandataire : **Corlau, Vincent**
**c/o Cabinet Patrice Vidon,**
**Immeuble Germanium,**
**80 avenue des Buttes de Coesmes**
**F-35700 Rennes (FR)**

## Description

Le domaine de l'invention est celui des réseaux câblés de distribution de signaux, notamment pour la distribution simultanée et/ou alternative de plusieurs types de signaux dont notamment des signaux audiovisuels comprenant entre autres des signaux d'images en bande de base ou encore des données informatiques. Ce type de réseau est destiné essentiellement aux applications domotique, par exemple pour la réalisation de réseaux internes de distribution de signaux en habitat individuel ou collectif, en entreprise, etc.

Ce type de réseau est constitué de lignes de transmission câblées courant entre des points de branchement d'appareils émetteurs et récepteurs de données. Plusieurs émetteurs peuvent alimenter simultanément le réseau en données disponibles pour les récepteurs.

Une des caractéristiques essentielles de tels réseaux est qu'ils doivent autoriser l'établissement de liaisons multipoints grâce auxquelles plusieurs récepteurs du réseau prélèvent simultanément un même signal provenant d'un émetteur commun sur le réseau. Un tel réseau doit en outre pouvoir avantageusement acheminer plusieurs liaisons multipoints de ce type simultanément.

Une autre caractéristique essentielle de ces réseaux est qu'ils doivent présenter une possibilité aisée de reconfiguration des liaisons établies, permettant de faire face au déplacement ou à l'ajoût d'appareils émetteurs ou récepteurs sur le réseau. Ils doivent également offrir une facilité de connexion sélective de chaque récepteur branché sur le réseau, aux signaux émis par tel ou tel émetteur du réseau.

Il existe de nombreux système de transmission pour les signaux audiovisuels, utilisant différents supports comme le câble coaxial ou la fibre optique. Ces systèmes connus réalisent des liaisons point à point, pour lesquelles les signaux sont disponibles uniquement aux extrêmités du support.

D'autre part, les supports existants destinés à transmettre des signaux d'images en bande de base ne sont opérationnels que sur quelques mètres. Il en est ainsi des cordons de péritélévision, qui ne peuvent dépasser deux mètres. Lorsque l'on veut effectuer la diffusion de signaux dans un habitat, il est donc jusqu'à présent nécessaire de faire appel à une cascade de liaisons point à point ou encore d'utiliser des distributeurs associés à des liaisons point à point. Il est également possible de réaliser des systèmes fonctionnant par multiplexage, au prix d'une relative complexité.

On connaît d'autre part un procédé de transfert simultané de signaux entre des points de connexion répartis entre des modules d'un ensemble électronique, tel que décrit dans la demande de brevet française FR-A-2597688 au nom d'Isaac Lellouche. Selon ce document antérieur, le procédé consiste à relier les modules électroniques par des lignes de transmission de signaux utiles, et des lignes de transmission de signaux de commande d'interconnexion des modules, cette interconnexion étant assurée par des matrices de commutation interposées entre chaque module et les lignes de transmission de signaux utiles. Chaque état d'interconnexion est configurable, point à point, au moyen de codes de définition de chaque connexion transmis sur la ligne de commande.

Ce procédé connu est décrit plus précisément en relation avec la réalisation de câblages de fonds de panier, de chassis ou de baies. Dans ce type d'application, la longueur des liaisons ne dépasse pas le mètre. De plus, ce procédé ne convient pas à la transmission simultanée de plusieurs signaux de types différents.

L'adaptation d'un tel système, et plus généralement la réalisation d'un réseau de transmission de signaux audiovisuels, en application domotique, pose un certain nombre de problèmes.

Ainsi, il est nécessaire de trouver une solution permettant la transmission de signaux émis en large bande, tels que les signaux vidéo en bande de base, sur des distances de plusieurs dizaines de mètres.

Il est également nécessaire de trouver une solution au problème du multiprélèvement d'un signal sur une même ligne du réseau, sans provoquer de phénomènes de désadaptation.

Il est enfin nécessaire de prévoir des moyens et des procédures d'identification et d'interconnexion des appareils branchés sur le réseau, susceptibles d'être mis en oeuvre par l'utilisateur du réseau domotique.

L'invention a notamment pour objectif de pallier les divers inconvénients des systèmes existants présentés plus haut, et de résoudre entre autres les problèmes mentionnés ci-dessus.

Ces objectifs, ainsi que d'autres qui apparaîtront par la suite, sont atteints à l'aide d'un réseau domotique câblé multipoints reconfigurable, de distribution simultanée et/ou alternative de plusieurs types de données, dont notamment des signaux audiovisuels comprenant entre autres des signaux d'images en bande de base, entre des jeux d'appareils comprenant chacun au moins un appareil injecteur de signaux sur le réseau et au moins un appareil récepteur desdits signaux, lesdits appareils étant susceptibles d'être indifféremment connectés chacun en différents points de branchement du réseau,

réseau du type constitué d'au moins d'une ligne de transmission desdits signaux pourvue de points de branchement desdits appareils au réseau répartis sur la longueur de ladite ligne,

caractérisé en ce que chaque ligne de transmission est constituée par une paire de conducteurs torsadée comportant au moins un point d'entrée pour le branchement d'un appareil d'injection d'un signal sur ladite paire de conducteur, et plusieurs points de sortie pour le branchement d'appareils de prélèvement dudit signal transmis sur la paire de conducteurs,

en ce que chacun desdits points de sortie comporte des moyens de prélèvement symétrique du signal sur les deux fils de ladite paire,

et en ce que lesdits moyens de prélèvement présentent une impédance forte par rapport à l'impédance de ladite paire de conducteurs, compatible avec un multiprélèvement du signal sur la paire de conducteurs.

De façon avantageuse, chacun des points de branchement est un point d'entrée/sortie comportant à la fois d'une part des moyens d'injection d'un signal sur ladite paire de conducteurs, et d'autre part, des moyens de prélèvement à faible niveau du signal transmis sur ladite paire de conducteurs, ainsi que des moyens de sélection du mode de fonctionnement dudit point de branchement, en injection et/ou en réception.

De façon avantageuse, chacun desdits points de branchement comporte des moyens ajustables d'égalisation du niveau du signal reçu par rapport au signal injecté sur le réseau, en fonction de la distance électrique séparant ledit point de sortie du point d'injection du signal sur ladite paire de fils.

Ces moyens d'égalisation sont par exemple constitués par des moyens de mémorisation, en chaque point de branchement, de sa distance électrique par rapport à un point unique de référence sur ladite paire de conducteurs, et des moyens de calcul de la distance électrique séparant deux points de branchement de ladite paire de conducteurs par soustraction algébrique de leur distance respective audit point de référence.

De façon alternative, les moyens d'égalisation comprennent :

. des moyens de mise en court circuit temporaire d'une ligne au niveau d'un premier desdits points de branchement d'injection,

. des moyens de mesure de la résistance électrique de ladite ligne courtcircuitée, vue du second desdits points de branchement,

. des moyens de sélection d'une valeur ajustée d'égalisation en fonction de ladite résistance électrique mesurée.

Avantageusement, lesdits moyens d'égalisation comprennent des cellules d'égalisation distinctes sélectivement commutables, seules ou en combinaison, en fonction de ladite distance électrique, résistance électrique mesurée respectivement.

La combinaison du principe de prélèvement de signaux large bande, de façon symétrique sur des paires de conducteurs torsadées, et de la mise en oeuvre de moyens d'égalisation ajustables en fonction de la distance parcourue par les signaux, permet d'obtenir un réseau domotique parfaitement adapté à la transmission simultanée de signaux numériques et analogiques de toutes natures dont notamment des signaux audiovisuels et téléphoniques. Il prend en compte l'arrivée de nouvelles technologies de codage audiovisuel (MAC, HDTV...) et de transmission téléphonique (RNIS).

Suivant le type de câble utilisé, la longueur du réseau s'étend de quelques mètres à plusieurs centaines de mètre.

Selon une autre caractéristique importante de l'invention, le réseau comporte :

- un faisceau de lignes constitué d'une part d'une pluralité de paires de conducteurs torsadées, et d'autre part d'au moins une ligne de signalisation,

- un jeu d'embases de liaison à contacts multiples dont chaque contact de liaison est connecté à une paire de conducteurs dudit faisceau,

- un jeu de prises à contacts multiples de connexion desdits appareils, comportant chacune des éléments de connexion dédiés à l'émission/réception d'un signal spécifique par type d'appareil,

- un jeu de matrices de commutation, chaque matrice étant interposée entre une embase de liaison et une prise de connexion associée pour la mise en contact sélective et reconfigurable de chaque élément de connexion de la prise d'appareil avec le contact de liaison de l'embase connectée à la paire de conducteurs porteuse du signal correspondant auxdits éléments de connexion dédiés,

- des moyens de commande de chacune desdites matrices de commutation, pour l'établissement et la rupture de chaque connexion d'appareil au réseau, comprenant d'une part des moyens d'émission des signaux de commande sur ladite ligne de signalisation, et d'autre part un organe de commande spécifique à chaque matrice de commutation relié à ladite ligne de signalisation.

Lesdits moyens d'émission de signaux de commande sont constitués par exemple par un appareil émetteur connectable en un point quelconque du réseau, du type Minitel (marque déposée) ou encore par un équipement de supervision susceptible de créer des connexions automatiques.

L'invention a également pour objet un procédé de configuration de ces réseaux, selon lequel chaque appareil connecté en un point de branchement du réseau est géré à partir d'une adresse logique constituée d'une information de type d'appareil, et donc de repérage de chacun des éléments de connexion dédiés de la prise de connexion dudit appareil, et d'une information spécifique d'identification individuelle dudit appareil.

Selon l'invention, le procédé de configuration comprend une procédure itérative d'affectation à chaque appareil nouvellement branché, d'un numéro d'identification spécifique, et des procédures de demande de connexion et de déconnexion entre un appareil émetteur et un appareil récepteur du réseau.

Selon une autre caractéristique de l'invention, ladite ligne de signalisation est utilisée pour la diffusion de l'information de commutation lente lors de la transmission de signaux d'images en péritélévision, ainsi que pour la transmission d'informations de télécommande d'appareils émetteurs sur le réseau.

D'autres caractéristiques et avantages de l'invention apparaîtront à la lecture suivante d'un mode de réalisation préférentiel donné à titre illustratif et non limitatif, et des dessins annexés dans lesquels :

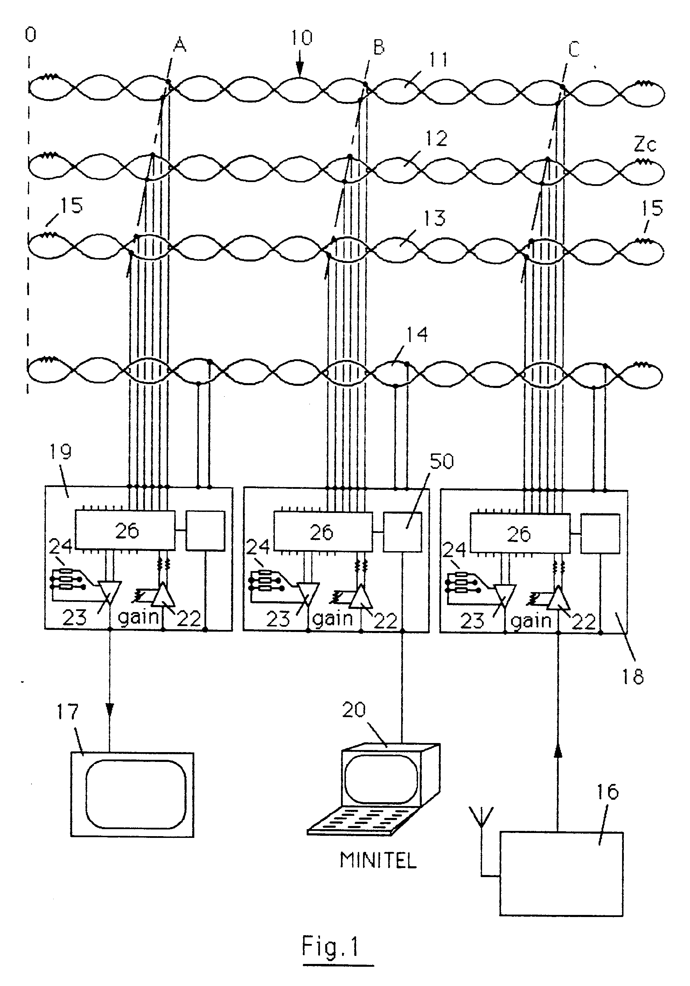

. la figure 1 représente une vue schématique d'une portion d'un réseau multipaires torsadées selon l'invention ;

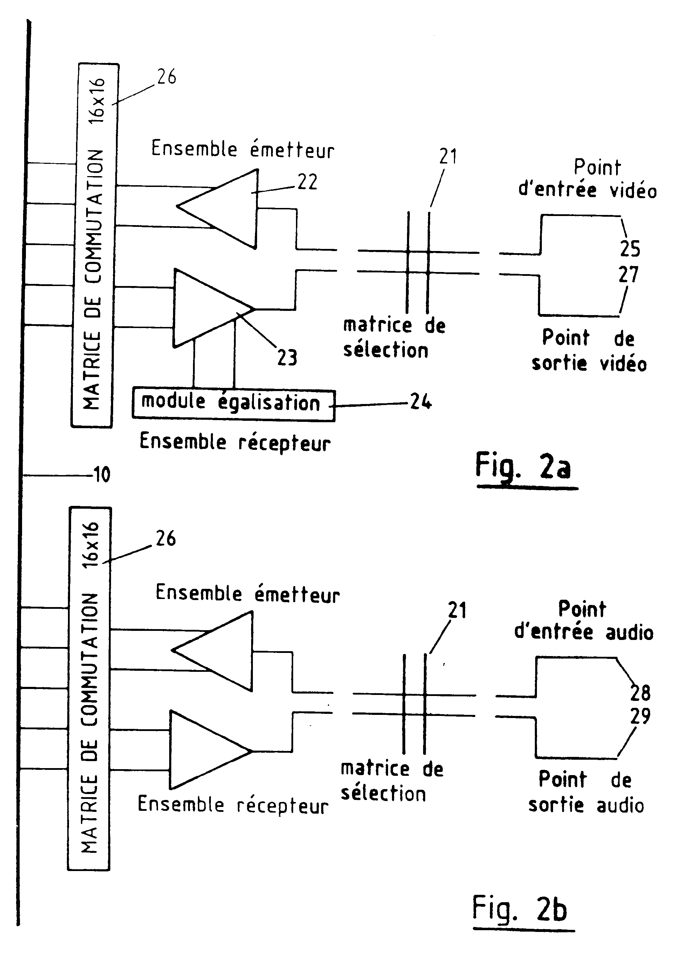

. les figures 2A, 2B illustrent schématiquement deux modes de réalisation de modules d'accès au réseau, en entrée/sortie, pour des signaux vidéo et audio respectivement ;

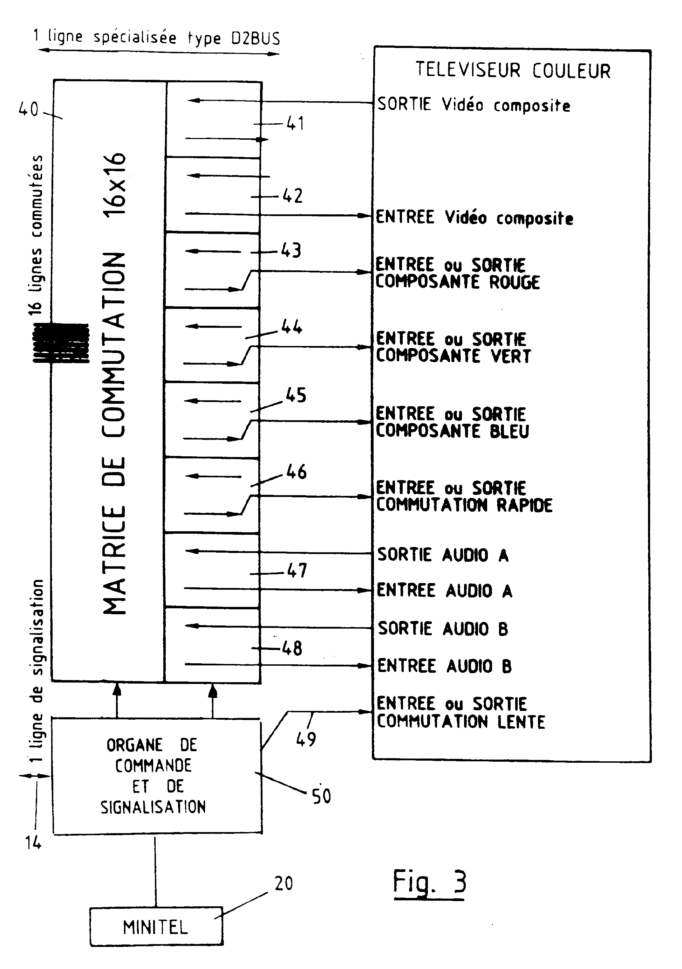

. la figure 3 schématise une configuration possible pour le branchement d'un terminal audiovisuel du type télévision couleur sur un point de branchement d'un réseau suivant l'invention à 16 lignes de transmission de signaux ;

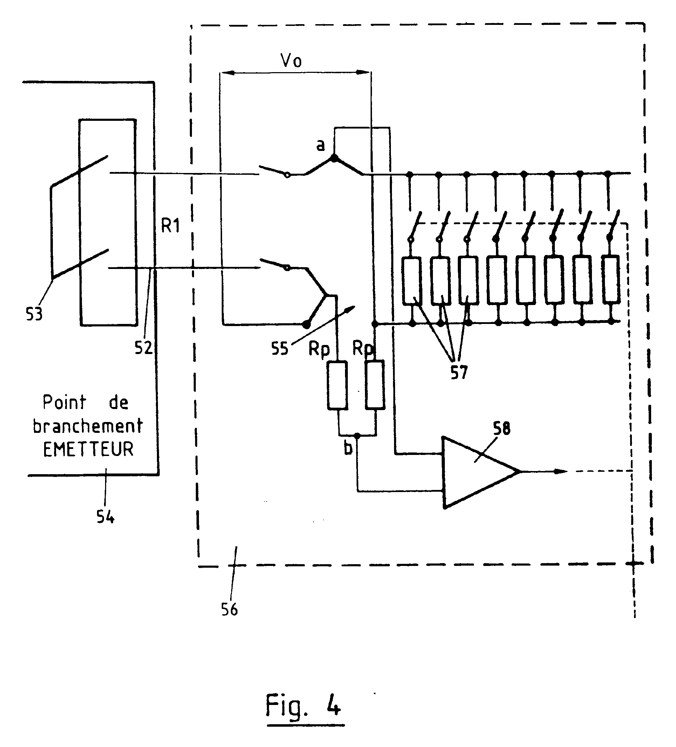

. la figure 4 présente un mode de réalisation avantageux d'un module d'égalisation automatique implantable sur un point de branchement en réception du réseau suivant l'invention ;

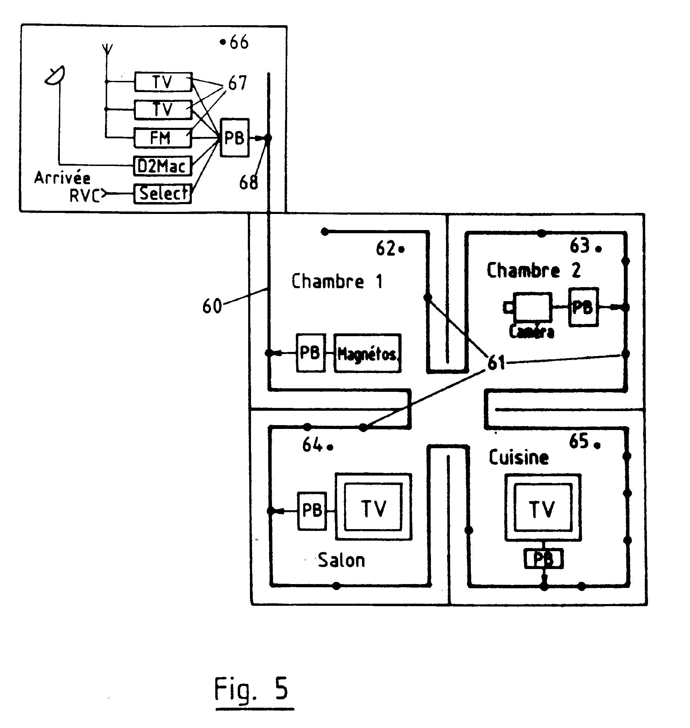

. la figure 5 illustre un mode préférentiel d'implantation d'un réseau suivant l'invention en habitat individuel ;

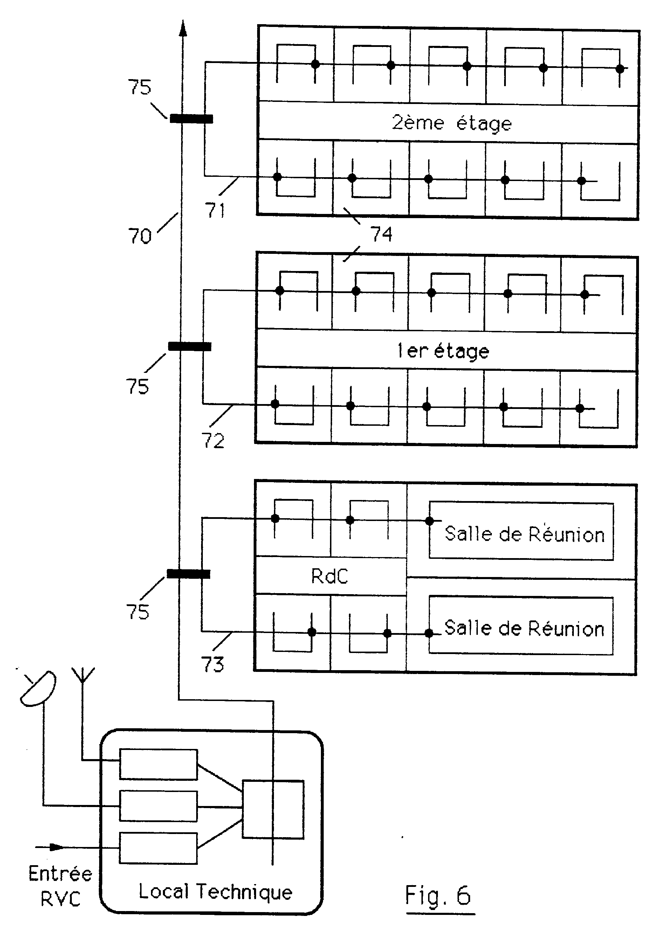

. la figure 6 illustre un mode préférentiel d'implantation d'un réseau suivant l'invention en habitat collectif du type hôtel ou hôpital.

Le mode de réalisation préférentiel présenté ci-après correspond à la réalisation d'un bus audiovisuel domestique utilisé pour l'exploitation de signaux audiovisuels, analogiques ou numériques en bande de base. Les signaux transmis peuvent être par exemple des signaux audio, vidéo, de télécommande d'appareil, de télésurveillance, ou de signalisation. Ces signaux peuvent être traités isolément ou en combinaison pour des applications domestiques de type audiovisuel ou télématique, ou relatives à la mise en oeuvre de systèmes d'automatismes ou de sécurité.

Ce bus audiovisuel domestique permet ainsi l'interconnexion dynamique des appareils audiovisuels grand public dispersés dans l'habitat (téléviseur, magnétoscope, chaîne HIFI, caméra et micro de surveillance...).

En rendant indifférents les emplacements physiques des appareils ou des prises de raccordement avec les réseaux extérieurs (réseaux de vidéocommunications), il résoud en particulier les problèmes de localisation mutuelle dans l'espace domestique d'équipements ordinairement apairés ou faits pour fonctionner en association (décodeur et téléviseur, magnétoscope et téléviseur).

Prolongement logique des réseaux externes de télécommunications et de diffusion, le bus domestique assure la diffusion dans tout l'habitat des programmes audiovisuels internes (chaîne HIFI, magnétoscope, caméra, etc.) ou externes (réseaux câblés). Par exemple, il permet la visualisation sur le téléviseur de la chambre de la cassette vidéo lue par le magnétoscope du salon ou la consultation sur grand écran couleur d'un téléviseur des services Télétel.

Il permet aussi d'exploiter toutes les caractéristiques des signaux issus des prises normalisées qui équipent tous les appareils audiovisuels. Il en résulte une optimisation de l'utilisation des prises audiovisuelles. En évitant la cascade de traitements (modulation, sélection, démodulation) il permet de maintenir la qualité des signaux tout en s'affranchissant des normes dans lesquelles ils sont disponibles (PAL, SECAM, NTSC, D2-MAC/Paquet). En mettant en relation, chez l'abonné, des réseaux externes habituellement indépendants, il favorise un meilleur usage des services externes et l'émergence de nouveaux services diffusés ou interactifs (canal sonore de la chaîne HIFI couplé à une image de télévision).

C'est une solution simple, économique et évolutive rendant facile l'ajoût et le déplacement des prises d'accès au réseau, assurant ainsi une très grande souplesse de reconfiguration. Pour cela, le bus audiovisuel domestique possède des mécanismes de gestion entièrement répartis tout au long du bus dans des points de branchement qui reçoivent par diffusion des messages numériques normalisés. Chaque point de branchement assure la surveillance de ses propres ressources sur le réseau. Des moyens de verrouillage de connexions larges bandes peuvent être prévus. Des mécanismes de priorité peuvent être utilisés en cas de saturation du bus ou d'occupation des terminaux, pour assurer des services prioritaires.

Comme représenté en figure 1, le bus est constitué d'un faisceau 10 de paires 11, 12, 13, 14 de conducteurs torsadées. Chacune des paires est bouclée à ses deux extrémités sur des résistances Zc 180 Ω correspondant à son impédance caractéristique.

De façon avantageuse, une impédance intermédiaire de valeur nettement supérieure est pontée entre les deux conducteurs pour chaque paire de grande longueur afin de compenser l'effet de résistance linéique des conducteurs (par exemple une résistance intermédiaire de 1 K ohms pour des paires de conducteurs cuivre de 150 m présentant une impédance caractéristique Zc = 120 ohms environ).

Des points de branchement A, B, C sont ménagés sur le faisceau multipaires 10. Leur emplacement est indifférent. Les embases de liaison aux conducteurs 11, 12, 13, 14 du faisceau 10 peuvent être des connecteurs du type autodénudant de câbles en nappe.

Au moins une paire 14 du faisceau 10 est affectée à la transmission de signaux de commande de signalisation, les autres paires 11, 12, 13 assurant la transmission de signaux utiles.

En chacun de ces points de branchement A, B, C, on peut prévoir la connexion d'au moins l'un des appareils suivants :

- un appareil 16 d'injection d'un signal sur au moins une des paires torsadées 11, 12, 13 du faisceau 10 ;
- un appareil 17 de prélèvement du signal sur au moins une des paires torsadées 11, 12, 13 ;
- un appareil 20 de commande.

Les appareils 16 et 17 de transmission et de réception respectivement des signaux utiles sur le faisceau 10 sont connectés aux paires de conducteurs 11, 12, 13 à travers des modules 18, 19.

Le module 18 associé à l'appareil 16 assure une injection du signal sur une ou plusieurs paires de fils.

A la réception, le module d'interface d'adaptation 19 associé à l'appareil récepteur 17 prélève lesdits signaux sur les paires de conducteurs correspondantes, à faible niveau.

Pour ce faire, les signaux sont injectés à partir d'amplificateurs différentiels large bande ayant une impédance de source élevée vis-à-vis de Zc/2 et prélevés, côté récepteur 17, par des amplificateurs différentiels en large bande présentant une impédance d'entrée très élevée par rapport à l'impédance caractéristique Zc/2 de chaque paire de fils de transmission du signal utile.

Chaque module 18, 19 servant d'interface d'adaptation entre les différents groupes de signaux des prises normalisées audiovisuelles des appareils audiovisuels des appareils 16, 17 et le faisceau 10 de paires torsadées, est constitué d'amplificateurs émetteurs 22, d'amplificateurs récepteurs 23 équipés de cellules 24 d'égalisation programmable en fonction de la distance, et de matrices 26 de commutation spatiale.

Comme représenté en figures 2A, 2B, ces modules 18, 19 sont avantageusement des modules d'entrée/sortie, spécialisés à l'émission/réception de signaux audio ou vidéo.

Chaque module vidéo (fig 2A) est constitué d'une part d'un ensemble émetteur comprenant un point d'entrée 25 adapté à la norme péritélévision, un amplificateur 22 à entrée en mode commun et sortie différentielle de la matrice de commutation 26. D'autre part, un ensemble récepteur comprenant un amplificateur de réception 23 à entrée en mode différentiel et sortie en mode commun adaptée à la norme péritélévision, est équipé de cellules d'égalisation programmable 24 en fonction de la distance séparant ledit module récepteur, lorsqu'il est actif, du module émetteur auquel il est connecté à travers le faisceau 10.

L'ensemble récepteur fournit le signal reçu au point de sortie vidéo 27. Enfin, une matrice de sélection 21 permet d'utiliser les deux ensembles émetteurs et récepteurs soit de façon totalement bidirectionnelle et indépendante, soit de façon unidirectionnelle (émetteur ou récepteur) en fonction de la nature de l'appareil connecté sur le point de branchement en question.

Chaque module audio (fig 2B) présente une structure analogue aux modules d'accès vidéo de la figure 2A. Une matrice de sélection 21 permet de rendre actif, sélectivement ou simultanément, le point d'entrée audio 28 et le point de sortie audio 29. A la différence du module d'accès vidéo, l'ensemble récepteur du module d'accès audio est dépourvu de cellules d'égalisation.

En effet, les modules d'égalisation sont destinés à compenser les pertes produites sélectivement en fonction de la fréquence lors de la transmission des signaux vidéo large bande.

Pour éviter l'apparition de diaphonie ou de diaphotie importante entre les signaux de la prise péritélévision qui raccorde l'équipement au point de branchement, il est nécessaire de distribuer les signaux sur les différents accès bidirectionnels en fonction de leur type et de leur sens.

Un exemple de configuration des entrées/sorties d'une prise à contacts multiples de connexion d'appareils sur un réseau à 16 paires de fils est représenté en figure 3.

Dans cet exemple, l'appareil connecté est un appareil récepteur du type téléviseur couleur. Au point de branchement, on utilise six modules d'accès bidirectionnel de type vidéo, et deux modules d'accès bidirectionnel de type son. L'exemple de raccordement représenté est le suivant :

     module 41 = Point d'entrée = entrée Vidéo Composite ;
     Point de sortie = inutilisé ;
     module 42 = Point d'entrée = initulisé ;
     Point de sortie = Sortie Vidéo Composite ;
     module 43 = Point d'entrée = inutilisé ;
     Point de sortie = Sortie Composante Rouge ;
     module 44 = Point d'entrée = inutilisé ;
     Point de sortie = Sortie Composante Vert ;
     module 45 = Point d'entrée = inutilisé ;

Point de sortie = Sortie Composante bleu ;
module 46 = Point d'entrée = inutilisé ;
Point de sortie = Sortie Commutation rapide ;
module 47 = Point d'entrée = entrée Audio A ;
Point de sortie = Sortie Audio A ;
module 48 = Point d'entrée = entrée Audio B ;
Point de sortie = Sortie Audio B ;

Dans l'exemple représenté, le téléviseur reçoit un signal télévision source crypté, par ses moyens propres, l'envoie vers un décodeur à travers le réseau (module 41), et reçoit en retour le signal décodé en composantes (modules 42 à 48).

L'information de commutation lente en entrée/sortie est avantageusement gérée à partir d'un organe de commande et de signalisation 50 gérant la matrice de commutation 40 et la ligne de signalisation 14.

Un accès par ligne spécialisée de type D2BUS est également prévu sur le point de branchement et utilise une paire fixe du faisceau 10 de paires torsadées.

La prise de connexion du téléviseur couleur est une prise de type péritélévision dont les éléments de connexion sont dédiés chacun à un signal spécifique (R,V,B, Commut. rapide, ...). Or, la transmission de chacun de ces signaux peut être affectée plus ou moins aléatoirement à l'une quelconque des paires torsadées du faisceau 10, lors de la mise en connexion du téléviseur avec l'émetteur correspondant sur le réseau. En conséquence, le rôle de la matrice de commutation 40 consiste à aiguiller chacun des signaux vidéo en composantes vers l'élément de connexion dédié correspondant de la prise péritélévision.

Cette commutation sélective effectuée par la matrice 40 est réalisée sous commande d'ordres envoyés sur la ligne de signalisation 14, et interprétés par l'organe de commande et de signalisation 50 associé à chaque matrice 40, et donc à chaque point de branchement sur le réseau.

Ces ordres de commande et de signalisation sont par exemple injectés sur la ligne de signalisation 14 par un appareil 20 fonctionnant en mode vidéotex (Minitel) et d'une manière générale par tout dispositif d'émission d'ordres (terminal informatique, boîtier de télécommande...)

La paire torsadée 14 véhicule les ordres de commande diffusés à l'ensemble des points de branchement raccordés sur le faisceau 10 de paires, et les ordres de télécommande des appareils raccordés au réseau domestique. Chaque organe 50 de commande et de signalisation comprend une entrée série de commande bidirectionnelle pour émettre des ordres et recevoir des messages en retour, des fils d'état en provenance de la prise péritélévision, un microprocesseur analysant les ordres et commandant la matrice de commutation 40, ainsi qu'un point de connexion d'au moins une paire torsadée fixe 14 reliant tous les points de branchement et sur laquelle transitent des paquets ou messages normalisés. Une mémoire de stockage permet d'enregistrer les états d'occupation des paires torsadées, et les mécanismes de gestion des ressources "large bande".

La figure 4 présente un mode de réalisation avantageux de moyens d'égalisation du signal reçu sur un point de branchement, en fonction de la distance électrique séparant ce point de branchement du point d'émission du signal sur le réseau.

En effet, le faisceau 10 de paires torsadées, comme tout support, affaiblit le signal en fonction de la distance. Pour tenir compte de l'affaiblissement sélectif qui se produit en fonction des fréquences, l'invention prévoit des moyens d'égalisation du signal reçu, avantageusement implantés dans chaque point de branchement des signaux susceptibles de fonctionner en mode réception.

Les moyens d'égalisation doivent impérativement être utilisés pour la réception des signaux en vidéo. Pour les lignes utilisées soit en bas débit, soit en son, il n'est pas nécessaire de prévoir des corrections.

Dans le mode de réalisation présenté en figure 4, les moyens d'égalisation sont constitués d'une série de cellules d'égalisation sélectivement commutables. Ces cellules sont des circuits passifs de type RC. Les circuits RC sont, par exemple, connectés sur la contreréaction des circuits intégrés de réception. Dans l'exemple présenté, chaque cellule est individuellement connectée, en fonction de l'importance de l'opération d'égalisation à effectuer. Le principe consiste à déterminer une longueur type de paire torsadée au delà de laquelle le signal sort d'un gabarit déterminé en fonction de la nature des signaux véhiculés sur le support et de leur bande passante. Chaque cellule correspond alors à la fonction d'égalisation d'un multiple distinct de cette longueur type.

Ainsi, pour un câble à paires torsadé de gauge 28 (AWG28) sur lequel sont véhiculés des signaux de bande passante 0-12 MHz, on peut définir 8 tronçons fictifs sur une longueur de 150 mètres. Une table en mémoire morte lue par le point de branchement, fait correspondre à chaque cellule d'égalisation l'intervalle de longueur pour lequel elle apporte une correction. Par exemple, la cellule 1 corrigera une longueur parcourue par le signal de 40 mètres environ, la cellule 2 corrigera 60 mètres, ..., la cellule 8 corrigera 150 mètres.

D'autres modes de réalisation des cellules sont également envisageables, sans sortir du cadre de l'invention.

Un premier mode de mesure de la distance parcourue par le signal reçue sur le réseau consiste à mémoriser pour chaque branchement sa longueur par rapport à un point de référence O du réseau. La distance séparant deux points de branchement est alors calculée par soustraction algébrique entre les distances respectives des deux points de branchement au point de référence.

Le marquage de la distance spécifique de chaque point de branchement par rapport au point de référence peut par exemple être réalisé manuellement lors de l'implantation du réseau câblé, par basculement de commutateurs de codage, ou équivalents.

La position d'un point de branchement par rapport au point de référence peut-être transmise à tout moment en répondant à un message particulier émis sur la ligne de signalisation.

La solution représentée en figure 4 correspond à une version automatisée du calcul de distance.

Lorsqu'on demande la connexion d'un récepteur sur le bus, une ligne 52 est mise en court-circuit 53 du côté de l'émetteur 54, pendant un temps fixe pour l'ensemble des points de branchement. Cette ligne en court-circuit est placée dans une branche d'un pont de Weasthone 55, sur le point de branchement récepteur 56. Sur l'autre branche du pont, on connecte une résistance composée de 8 valeurs 57. Chaque résistance 57, ou combinaison des résistances élémentaires 57, correspond à la résistance de la ligne pour différents pas d'égalisation.

Tant que le pont de Weasthone n'est pas équilibré, le comparateur 58 fournit une tension mettant en oeuvre la commutation d'une autre résistance élémentaire 57, et donc d'une cellule d'égalisation distincte.

La figure 5 schématise une procédure d'affectation d'un numéro d'identification à un appareil branché sur le réseau suivant l'invention.

De façon avantageuse, tout appareil nouvellement branché se voit affecter une adresse constituée d'une part d'un identifiant du type d'appareil, et d'autre part d'un identifiant d'individualisation de l'appareil.

L'identifiant du type d'appareil permet de repérer, sur la prise de connexion de l'appareil, la position (standardisée) des éléments de connexion, et donc permet la commande de la matrice de commutation.

L'identifiant d'individualisation de l'appareil est constitué soit par un numéro d'identification, soit par un mnémonique choisi par l'utilisateur (téléviseur salon, magnétoscope enfants) ou tout autre code alphanumérique.

La configuration du réseau suppose l'affectation d'un identifiant appelé TEI, à chaque point de branchement. Cette procédure est réalisée par l'émission de messages multiplexés sur la paire de conducteurs de signalisation commune à l'ensemble des points de branchement.

A la mise sous tension du point de branchement, l'usager doit le configurer, soit par exemple en utilisant des interrupteurs indiquant le type d'appareil utilisé, soit en dialoguant avec le point de branchement au moyen d'un terminal du type Minitel connecté à l'entrée de commande bidirectionnelle pour entrer les mnémoniques utilisés.

Le point de branchement diffuse ensuite, sur la paire de conducteurs de signalisation, une recherche de numéro de TEI libre en émettant une trame non numérotée. Cette trame comporte par exemple un identificateur de service, un TEI de diffusion contenant comme information une référence aléatoire, et un numéro de TEI préféré. La référence aléatoire de la trame permet d'effectuer une distinction entre plusieurs messages quasi simultanés de demandes d'affectation d'un identifiant par plusieurs points de branchement.

Si aucune trame d'identité refusée contenant la référence aléatoire du point de branchement n'est reçue pendant un temps T fixe, il y a réémission de la trame de demande d'affectation de TEI un nombre N de fois avant de décider que le TEI préféré n'est pas utilisé sur le réseau. Une telle décision permet d'attacher alors le mnémonique choisi par l'utilisateur à ce TEI.

Dans le cas où un gestionnaire général supervise le réseau, à partir d'un tableau d'état des branchements d'appareils, le TEI peut-être attribué au mnémonique dès la réception d'un message d'acceptation, sans réémission du message de demande d'affectation.

En revanche, si une trame d'identité refusée contenant la référence aléatoire du point de branchement est reçue dans le temps T, cela indique qu'il existe un TEI idendique déjà affecté sur le réseau. Il est donc nécessaire de modifier la valeur du TEI préféré, par exemple en incrémentant sa valeur d'une unité puis de réémettre une nouvelle trame de demande d'affectation.

De façon avantageuse, les formats de trames de demande d'identité, d'identité acceptée, et d'identité refusée sont conformes au format du RNIS.

Dans le cas où on mémorise une liste des appareils connectés au réseau, chaque article de ladite liste correspond à un appareil distinct, et comprend ladite adresse logique de l'appareil (type d'appareil, et identifiant individuel), ainsi avantageusement qu'une information de l'état actif ou au repos de la liaison dudit appareil avec le réseau. Cette liste est mise à jour à chaque modification de branchement et/ou d'interconnexion sur le réseau.

De façon avantageuse, à chaque appareil est associé un niveau de priorité. La prise en compte du niveau de priorité s'effectue de manière que les procédures d'établissement de connexion privilégient les connexions établies en fonction du niveau de priorité de l'appareil de plus haute priorité de chaque connexion.

Lorsqu'un usager veut créer une connexion large bande entre appareils, il connecte son Minitel sur le point de branchement le plus proche de lui. La phase de connexion fait apparaître la carte des équipements audiovisuels connectés sur le BUS et susceptibles d'être mis en connexion. Cette carte se constitue en temps réel grâce à la diffusion d'une primitive de requête "qui est raccordé ?". Chaque point de branchement actif retourne sa valeur de TEI et son mnémonique usager. Une autre primitive de diffusion permet de connaître quels sont les appareils émettant des signaux large bande sur le bus.

L'usager peut établir une connexion entre appareils en émettant une requête de connexion comprenant le numéro de l'appareil source, sa sous-adresse indiquant le type d'appareil et donc le nombre de lignes requis, son degré de priorité, le numéro de l'appareil destination, sa sous-adresse indiquant le type d'appareil, son degré de priorité réception. Le point de branchement émetteur qui reçoit la demande établit la connexion avec le récepteur en utilisant des lignes du bus libres. Une fois la connexion établie, un accusé de réception est retourné vers le point de branchement qui a émis la demande afin d'avertir l'usager de la bonne exécution ou non de requête.

En d'autres termes, la procédure de demande d'établissement de connexion entre un appareil émetteur et un appareil récepteur sur ledit réseau consiste à :

. émettre une requête de connexion comprenant l'adresse logique de l'appareil émetteur et l'adresse logique de l'appareil récepteur comprenant des paramêtres (niveaux de priorité, terminal, ligne, position sur le câble...) ;

. obtenir de chacun des points de branchement desdits appareils émetteur et récepteur une information d'existence de paires de conducteurs, soit déjà porteuses des signaux impliqués par la connexion demandée, soit disponibles en nombre suffisant pour l'établissement de ladite connexion demandée ;

. établir ou faire avorter ladite connexion demandée en fonction de la valeur de ladite information d'existence.

Pour couper une connexion large bande, l'usager fait apparaître l'ensemble des connexions. Il peut demander à déconnecter soit un émetteur soit un récepteur. En fonction du degré de priorité utilisé, du mode d'utilisation simple ou multiple, l'appareil peut ou non être déconnecté.

Le bus audiovisuel domestique permet également de diffuser, à l'ensemble des récepteurs, l'état de la commutation lente de l'appareil émetteur qui leur est connecté et à l'ensemble des appareils sur le bus des informations de commande des appareils eux-même en fonction d'un niveau de priorité utilisateur (priorité parentale, priorité de supervision...). Ces messages d'informations sont véhiculés dans des paquets de données.

Lorsque l'usager décide de déplacer un équipement audiovisuel dans son habitation, par exemple déplacer le téléviseur enfant de la chambre dans la cuisine, il peut soit déplacer l'ensemble téléviseur et le point de branchement associé, soit déplacer l'équipement audiovisuel uniquement pour le reconnecter sur un autre point de branchement libre.

Dans le premier cas, la valeur du TEI et les mnémoniques associés peuvent être conservés. Dans le deuxième cas, l'usager doit reconfigurer le nouveau point de branchement pour lui attribuer ses nouveaux mnémoniques. L'entrée en phase de configuration du point de branchement provoque la remise à O du TEI précédent et une nouvelle phase d'affectation de TEI.

La figure 5 schématise l'implantation du réseau de l'invention en habitat individuel.

En principe, un bus 60 de 150 m, pourvu de points de branchement 61 dans les différentes pièces 62, 63, 64, 65 de l'habitat, doit pouvoir faire face à la majorité des câblages des habitations individuelles neuves ou rénovées. Néanmoins, rien n'interdit d'utiliser par exemple deux bus reliés entre eux directement, ou utilisant un bus de transfert intermédiaire. Dans tous les cas, on utilisera des points de branchement jouant le rôle de répéteur. Tous les démodulateurs 67 ont été réunis en un même lieu 66 et les signaux sont injectés en un point de branchement unique 68. Cette configuration n'est pas indispensable.

La figure 6 est un exemple de câblage d'un habitat collectif, tel qu'un hôtel, un hôpital, etc...

On utilise un ou plusieurs bus primaire 70 suivant la taille du bâtiment ; sur chaque palier, un ou plusieurs bus secondaires 71, 72, 73 récupèrent les signaux pour les acheminer dans les chambres 74. Des aménagements peuvent se faire au niveau de certaines salles spécialisées (salle de conférence, salle de réunion, etc). Ces aménagements consistent à :

. soit leur affecter quelques paires spécifiques sur le bus,

. soit les câbler avec un bus spécifique.

Ces salles peuvent alors fonctionner en assurant un secret vis-à-vis du reste de l'installation ou se raccorder au réseau général et éventuellement générer un programme pour le diffuser.

Des essais ont été effectués sur un réseau tel que décrit ci-dessus, muni de 16 paires cuivre torsadées, sur une longueur de 150 m. Les prélèvements des signaux sur les paires torsadées attaquées en symétrique s'effectuaient à faible niveau (300 mV c/c.), avec des circuits intégrés de type NE 592.
Le tableau ci-après illustre des qualités obtenues, qui sont conformes en niveau à la norme Péritel.

| AUDIO | | VIDEO | |
|---|---|---|---|
| Distorsion | 0,5 % | Gain différentiel | > 2 % |
| Diaphonie | 85 dB | Phase différentiel | > 2 % |
| Bande passante | 15 kHz | Bande passante | > 12 MHz |
| | | Diaphotie | > 42 dB |
| Signal/bruit | 70 dB | Signal/bruit | > 65 dB |

**Revendications**

1. Réseau domotique câblé multipoints reconfigurable, de distribution simultanée et/ou alternative de plusieurs types de données, dont notamment des signaux audiovisuels comprenant entre autres des signaux d'images en bande de base, entre des jeux d'appareils comprenant chacune au moins un appareil injecteur de signaux sur le réseau et au moins un appareil récepteur desdits signaux, lesdits appareils étant susceptibles d'être indifféremment connectés chacun en différents points de branchement du réseau, réseau du type constitué d'au moins d'une ligne (11,12,13) de transmission desdits signaux pourvue de points de branchement (A,B,C,) desdits appareils au réseau répartis sur le longueur de ladite ligne, caractérisé en ce que chaque ligne de transmission est constituée par une paire de conducteurs torsadée comportant au moins un point d'entrée (C) pour le branchement d'un appareil (16) d'injection d'un signal sur ladite paire de conducteurs, et plusieurs points de sortie (A) pour le branchement d'appareils (17) de prélèvement dudit signal transmis sur la paire de conducteurs, en ce que chacun desdits points de sortie comportent des moyens (19) de prélèvement symétrique du signal sur les deux fils de ladite paire (13), et en ce que lesdits moyens de prélèvement présentent une impédance forte par rapport à l'impédance de ladite paire de conducteurs (13), compatible avec un multiprélèvement du signal sur la paire de conducteurs (13).

2. Réseau selon la revendication 1 caractérisé en ce qu'au moins un desdits points de branchement (A,C) est un point d'entrée/sortie comportant à la fois d'une part des moyens (18) d'injection d'un signal sur ladite paire de conducteurs, et d'autre part, des moyens de prélèvement (19) du signal transmis à faible niveau sur ladite paire de conducteurs, ainsi que des moyens de sélection (26) du mode de fonctionnement dudit point de branchement, en injection et/ou réception.

3. Réseau selon l'une quelconque des revendications 1 et 2 caractérisé en ce que chacun desdits points de sortie du réseau comporte des moyens (24) ajustables d'égalisation du niveau du signal reçu par rapport au signal injecté sur le réseau, en fonction de la distance électrique séparant ledit point de sortie du point d'injection du signal sur ladite paire de fils.

4. Réseau selon la revendication 3 caractérisé en ce que lesdits moyens d'égalisation comprennent des moyens de mémorisation, en chaque point de branchement de sa distance électrique par rapport à un point unique de référence sur ladite paire de conducteurs, et des moyens de calcul de la distance électrique séparant deux points de branchement de ladite paire de conducteur par soustraction algébrique de leur distance respective audit point de référence [50].

5. Réseau selon la revendication 3 caractérisé en ce que lesdits moyens d'égalisation comprennent :
   - des moyens (53) de mise en court circuit temporaire d'une ligne (52) au niveau d'un premier (54) desdits points de branchement d'injection,
   - des moyens (55) de mesure de la résistance électrique de ladite ligne courtcircuitée, vue du second (56) desdits points de branchement,
   - des moyens (58) de sélection d'une valeur ajustée d'égalisation en fonction de ladite résistance électrique mesurée.

6. Réseau selon l'une quelconque des revendications de 1 à 5 caractérisé en ce qu'il comporte :
   - un faisceau de lignes constitué d'une part d'une pluralité de paires de conducteurs torsadées (11,12,13) de transmission des signaux utiles, et d'autre part d'au moins une ligne de signalisation (14),
   - un jeu d'embases de liaison à contacts multiples dont chaque contact de liaison est connecté à une paire de conducteurs dudit faisceau,
   - un jeu de prises à contacts multiples de connexion desdits appareils, comportant chacune des éléments de connexion dédiés à l'émission/réception d'un signal spécifique par type d'appareil,
   - un jeu de matrices de commutation (26,40), chaque matrice étant interposée entre une embase de liaison et une prise de connexion associée pour la mise en contact sélective et reconfigurable de chaque élément de connexion de la prise d'appareil avec le contact de liaison de l'embase connectée à la paire de conducteurs porteuse du signal correspondant auxdits éléments de connexion dédiés,
   - des moyens de commande de chacune desdites matrices de commutation, pour l'établissement et la rupture de chaque connexion d'appareil au réseau, comprenant d'une part des moyens (20) d'émission des signaux de commande sur ladite ligne de signalisation, et d'autre part un organe (50) de commande spécifique à chaque matrice de commutation relié à ladite ligne de signalisation (14).

7. Réseau selon la revendication 6 caractérisé en ce qu'il est constitué d'au moins deux faisceaux (70,71) de paires de conducteurs torsadées reliés par répéteur (75) et/ou en ce que ladite ligne de signalisation (14) est constituée par au moins une paire de conducteurs torsadée.

8. Réseau suivant la revendication 6 caractérisé en ce que lesdits moyens d'émission de signaux de commande sont constitués par un appareil émetteur (20) connectable en un point quelconque du réseau, et/ou comprennent un équipement de supervision susceptible de créer des connexions automatiques.

9. Procédé de configuration d'un réseau selon la revendication 6, caractérisé en ce qu'on attribue une adresse logique à chaque appareil connecté en un point de branchement du réseau, ladite adresse logique étant constituée de deux champs distincts :
   - un premier champ identifiant le type d'appareil, et donc le repérage de chacun des éléments de connexion dédiés de la prise de connexion dudit appareil;
   - un second champ identifiant spécifiquement ledit appareil de façon individualisée.

10. Procédé selon la revendication 9 caractérisé en ce qu'il comprend une procédure itérative d'affectation, à chaque appareil nouvellement branché sur le réseau, d'un numéro individuel d'identification, procédure consistant :
    - à émettre au moins une fois sur la ligne de signalisation un message test contenant une première valeur de numéro candidat ;
    - à tester un nouveau numéro candidat à chaque refus du numéro candidat courant, par un appareil déjà branché au réseau et/ou par un équipement de supervision dudit réseau ;
    - à affecter audit appareil ledit numéro candidat en l'absence de refus.

11. Procédé selon la revendication 9 caractérisé en ce qu'il comprend une procédure de demande d'établissement de connexion entre un appareil émetteur et un appareil récepteur sur ledit réseau consistant à :
    - émettre une requête de connexion comprenant l'adresse logique de l'appareil émetteur et l'adresse logique de l'appareil récepteur ;
    - obtenir de chacun des points de branchement desdits appareils émetteur et récepteur une information d'existence de paires de conducteurs, soit déjà porteuses des signaux impliqués par la connexion demandée, soit disponibles en nombre suffisant pour l'établissement de ladite connexion demandée ;
    - établir ou avorter ladite connexion demandée en fonction de la valeur de ladite information d'existence.

12. Procédé de configuration d'un réseau selon la revendication 6, notamment pour la transmission de signaux d'images en péritélévision caractérisé en ce qu'on diffuse l'information de commutation lente desdits signaux d'images sur ladite ligne de signalisation.

13. Procédé de configuration d'un réseau selon la revendication 6 caractérisé en ce qu'on transmet sur ladite ligne de signalisation des informations de télécommande d'un appareil émetteur connecté au le réseau.

**14.** Procédé selon la revendication 9 ou 13 caractérisé en ce qu'on affecte à chaque appareil un niveau de priorité et en ce que les procédures d'établissement de connexion, en cas de saturation du réseau, privilégient les connexions établies en fonction du niveau de priorité de l'appareil de plus haute priorité de chaque connexion.

**Patentansprüche**

**1.** Rekonfigurierbares Vielpunkthauskabelnetz für simultane und/oder alternative Verteilung mehrerer Datentypen, darunter insbesondere audiovisuelle Signale, die u. a. Basisband-Bildsignale enthalten, zwischen Gerätesätzen, die jeweils mindestens ein Gerät zum Einspeisen von Signalen ins Netz und mindestens ein Empfangsgerät für die Signale umfassen, wobei die Geräte in der Lage sind, jeweils an verschiedene Netzanschlußpunkte angeschlossen zu werden,
wobei das Netz aus mindestens einer Leitung (11, 12, 13) zum Senden der Signale besteht, welche über Anschlußpunkte (A, B, C) der Geräte ans Netz verfügt, die über die Länge der Leitung verteilt sind,
dadurch gekennzeichnet, daß jede Sendeleitung aus einem Paar verdrillter Leiter besteht, mit mindestens einem Eingangspunkt (C) für den Anschluß eines Geräts (16) zum Einspeisen eines Signals in das Leiterpaar sowie mit mehreren Ausgangspunkten (A) für das Zuschalten von Geräten (17), zum Abgreifen des über das Leiterpaar gesendeten Signals,
daß jeder der Ausgangspunkte Mittel (19) zum symmetrischen Abgreifen des Signals über beide Leiter des Paares (13) aufweist und
daß die Mittel zum Abgreifen eine hohe Impedanz bezüglich der Impedanz des Leiterpaares (13) aufweisen, die kompatibel mit einem Mehrfachabgriff des Signals am Leiterpaar (13) ist.

**2.** Netz gemäß Anspruch 1,
dadurch gekennzeichnet, daß mindestens einer der Anschlußpunkte (A, C) ein Eingangs-/Ausgangspunkt ist, der gleichzeitig einerseits Mittel (18) zum Einspeisen eines Signals in das Leiterpaar aufweist und andererseits über Mittel (19) zum Abgreifen des mit niedrigem Pegel über das Leiterpaar übertragenen Signals enthält sowie über Auswahlmittel (26) für den Funktionsmodus des Anschlußpunktes, im Einspeisemodus und/oder im Empfangsmodus.

**3.** Netz gemäß einem der Ansprüche 1 und 2,
dadurch gekennzeichnet, daß jeder der Ausgangspunkte aus dem Netz über einstellbare Mittel (24) zum Egalisieren des Pegels des empfangenen Signals bezüglich des in das Netz eingespeisten Signals verfügt, abhängig von der elektrischen Entfernung zwischen dem Ausgangspunkt und dem Einspeisepunkt des Signals in das Leiterpaar.

**4.** Netz gemäß Anspruch 3,
dadurch gekennzeichnet, daß die Mittel zum Egalisieren an jedem Anschlußpunkt über einen Datenspeicher verfügen, der jeweils die elektrische Entfernung zwischen dem Anschlußpunkt und einem einzigen Referenzpunkt auf dem Leiterpaar speichert sowie über Mittel zur Berechnung der elektrischen Entfernung zwischen zwei Anschlußpunkten des Leiterpaares mittels algebraischer Subtraktion ihrer Entfernung zum Referenzpunkt (50).

**5.** Netz gemäß Anspruch 3,
dadurch gekennzeichnet, daß die Mittel zum Egalisieren folgendes enthalten:
- Mittel (53) zum vorübergehenden Kurzschließen einer Leitung (52) an einem der ersten (54) der Einspeisepunkte,
- Mittel (55) zum Messen des elektrischen Widerstandes der kurzgeschlossenen Leitung, vom zweiten (56) der besagten Anschlußpunkte aus gesehen,
- Auswahlmittel (58) für einen eingestellten Egalisierungswert in Abhängigkeit des gemessenen elektrischen Widerstandes.

**6.** Netz gemäß einem der Ansprüche 1 bis 5,
dadurch gekennzeichnet, daß es enthält:
- ein Leitungsbündel, das einerseits aus einer Vielfalt verdrillter Leitungen (11, 12, 13) zur Weitergabe von Nutzsignalen und andererseits aus mindestens einer Signalübermittlungsleitung (14) besteht,

- einen Satz fester Mehrfachkupplungen, wobei jeder Verbindungskontakt mit einem Leiterpaar des Bündels verbunden ist,
- einen Satz Mehrfachstecker für den Anschluß der Geräte, die jeweils Anschlußelemente enthalten, die dem Senden/Empfangen eines für jeden Gerätetyp spezifischen Signals dienen,
- einen Satz Schaltmatrizen (26, 40), wobei jede Matrix zwischen einer Kupplung und einem zugeordneten Verbindungsstecker angebracht ist, um die selektive und rekonfigurierbare Kontaktherstellung zwischen einem jeden Verbindungselement des Gerätesteckers und dem Verbindungskontakt der Kupplung zu gewährleisten, der mit dem Leiterpaar verbunden ist, der das entsprechende Signal an die zugeordneten Verbindungselemente weiterleitet,
- Steuerungsmittel für jede der Schaltmatrizen, um die Herstellung und die Unterbrechung eines jeden Geräteanschlusses an das Netz durchzuführen, welche einerseits Sendemittel (20) der Steuersignale über die Signalleitung und andererseits ein spezifisches Steuerungsorgan (50) für jede Schaltmatrix enthalten, die mit der Signalleitung (14) verbunden ist.

7. Netz gemäß Anspruch 6,
dadurch gekennzeichnet, daß es aus mindestens zwei Bündeln (70, 71) verdrillter Leiterpaare besteht, die über Repeater (75) verbunden sind und/oder dadurch, daß die Signalleitung (14) aus mindestens einem verdrillten Leiterpaar besteht.

8. Netz gemäß Anspruch 6,
dadurch gekennzeichnet, daß die Signalsendemittel aus einem Sendegerät (20) bestehen, das an einem beliebigen Punkt des Netzes angeschlossen werden kann und/oder ein Steuerungssystem enthalten, das in der Lage ist, automatische Verbindungen herzustellen.

9. Verfahren zur Konfiguration eines Netzes gemäß Anspruch 6,
dadurch gekennzeichnet, daß jedem an einem Anschlußpunkt des Netzes angeschlossenen Gerät eine logische Adresse zugeordnet wird, wobei die logische Adresse aus zwei unterschiedlichen Feldern besteht:
- ein erstes Feld, welches den Gerätetyp identifiziert und somit jedes der Verbindungselemente ortet, die der Verbindung mit dem Gerät zugeteilt sind;
- ein zweites Feld, welches das Gerät spezifisch in individualisierter Weise identifiziert.

10. Verfahren gemäß Anspruch 9,
dadurch gekennzeichnet, daß es über ein iteratives Zuordnungsverfahren verfügt, um jedem neuen, dem Netz angeschlossenen Gerät, eine individuelle Identifikationszahl zuzuordnen, wobei das Verfahren darin besteht:
- daß über die Signalleitung mindestens einmal eine Testmeldung gesendet wird, die einen ersten Wert einer Kandidatenzahl enthält;
- daß bei jeder Ablehnung der laufenden Kandidatenzahl, eine neue Kandidatenzahl durch ein Gerät, das bereits an das Netz angeschlossen ist und/oder durch ein das Netz steuerndes Gerät getestet wird;
- daß die Kandidatenzahl dem Gerät zugeordnet wird, falls keine Ablehnung vorliegt.

11. Verfahren gemäß Anspruch 9,
dadurch gekennzeichnet, daß es ein Verfahren zum Anfragen einer Verbindung zwischen einem Sendegerät und einem Empfangsgerät im Netz enthält, das darin besteht:
- daß eine Verbindungsanfrage gesendet wird, die die logische Adresse des Sendegeräts und die logische Adresse des Empfanggeräts enthält;
- daß von jedem Anschlußpunkt der Sende- und Empfangsgeräte eine Information bezüglich der Existenz von Leiterpaaren erhalten wird, die entweder bereits Träger der mit der Verbindungsanfrage zusammenhängenden Signale oder aber in ausreichendem Maße verfügbar sind, um die angefragte Verbindung herzustellen;
- daß die angefragte Verbindung als Funktion des Wertes der Existenzinformation aufgebaut oder abgebrochen wird.

12. Verfahren zur Konfiguration eines Netzes gemäß Anspruch 6, insbesondere für das Senden von Bildsignalen in Peritelevision, dadurch gekennzeichnet, daß die Information bezüglich des langsamen Schaltens der Bildsignale über die Signalleitung gesendet wird.

**13.** Verfahren zur Konfiguration eines Netzes gemäß Anspruch 6,
dadurch gekennzeichnet, daß über die Signalleitung Informationen zur Fernsteuerung eines an das Netz angeschlossenen Sendegeräts gesendet werden.

**14.** Verfahren gemäß Anspruch 9 oder 13,
dadurch gekennzeichnet, daß jedem Gerät ein Prioritätsniveau zugeordnet wird und daß die Verfahren zum Aufbau von Verbindungen bei ausgelastetem Netz die Verbindungen bevorzugen, die in Abhängigkeit des Prioritätsniveaus des Geräts höchster Priorität einer jeden Verbindung hergestellt wurden.

## Claims

**1.** Reconfigurable multipoint cable domestic computer network, for simultaneous and/or alternate distribution of several types of data, particularly including audiovisual signals comprising, among others, image signals at baseband, between sets of apparatuses each comprising at least one apparatus injecting signals onto the network and at least one apparatus receiving the said signals, the said apparatuses each being equally capable of being connected at different connection points of the network,
a network of the type consisting of at least one line (11, 12, 13) for transmission of the said signals, which is provided with points (A, B, C) for connecting the said apparatuses to the network distributed along the length of the said line,
characterized in that each transmission line consists of a twisted pair of conductors including at least one entry point (C) for connecting an apparatus (16) for injecting a signal onto the said pair of conductors, and several exit points (A) for connecting apparatuses (17) for tapping off the said signal transmitted on the pair of conductors,
in that each of the said exit points includes means (19) for symmetrically tapping off the signal on the two wires of the said pair (13),
and in that the said tapping means exhibit a high impedance with respect to the impedance of the said pair of conductors (13), which is compatible with multi-tapping of the signal on the pair of conductors (13).

**2.** Network according to Claim 1, characterized in that at least one of the said connection points (A, C) is an entry/exit point including both, on the one hand, means (18) for injecting a signal onto the said pair of conductors, and, on the other hand, means (19) for tapping off the transmitted signal at a low level on the said pair of conductors, as well as means (26) for selecting the mode of operation of the said connection point, in injection and/or reception.

**3.** Network according to either of Claims 1 or 2, characterized in that each of the said exit points of the network includes adjustable means (24) for equalizing the level of the signal received with respect to the signal injected onto the network, as a function of the electrical distance separating the said exit point from the injection point of the signal on the said pair of wires.

**4.** Network according to Claim 3, characterized in that the said equalization means comprise memory-storage means, at each connection point, of its electrical distance with respect to a single reference point on the said pair of conductors, and means for calculating the electrical distance separating two connection points of the said pair of conductors by algebraic subtraction of their respective distance to the said reference point [50].

**5.** Network according to Claim 3, characterized in that the said equalization means comprise:
- means (53) for temporarily short-circuiting a line (52) in the region of a first (54) of the said injection connection points,
- means (55) for measuring the electrical resistance of the said short-circuited line, seen from the second (56) of the said connection points,
- means (58) for selecting an equalization value adjusted as a function of the said measured electrical resistance.

**6.** Network according to any one of Claims 1 to 5, characterized in that it includes:
- a bundle of lines consisting, on the one hand, of a plurality of twisted pairs of conductors (11, 12, 13) for transmitting the useful signals, and, on the other hand, of at least one signalling line (14),
- a set of multiple-contact linking sockets, in which each linking contact is connected to a pair of conductors of the said bundle,
- a set of multiple-contact plugs for connecting the said apparatuses, each including connection elements dedicated to the transmission/reception of a specific signal per type of apparatus,
- a set of switching matrices (26, 40), each matrix being interposed between a linking socket and an associated connection plug for selectively and reconfigurably making contact from each connection element of the apparatus plug with the linking contact of the socket connected to the pair of conductors carrying the signal corresponding to the said dedicated connection elements,
- means for controlling of each of the said switching matrices, for setting up and breaking each connection of an apparatus to the network, comprising, on the one hand, means (20) for sending control signals onto the said signalling line, and, on the other hand, a control unit (50) specific to each switching matrix linked to the said signalling line (14).

7.  Network according to Claim 6, characterized in that it consists of at least two bundles (70, 71) of twisted pairs of conductors linked by repeater (75) and/or in that the said signalling line (14) consists of at least one twisted pair of conductors.

8.  Network according to Claim 6, characterized in that the said control signal transmission means consist of a transmitting apparatus (20) which can be connected at any point of the network, and/or comprising supervision equipment capable of creating automatic connections.

9.  Method of configuring a network according to Claim 6, characterized in that a logic address is assigned to each apparatus connected at a connection point of the network, the said logic address consisting of two distinct fields:
    - a first field identifying the type of apparatus, and thus the indexing of each of the dedicated connection elements of the connecting plug of the said apparatus;
    - a second field specifically identifying the said apparatus in an individualized way.

10. Method according to Claim 9, characterized in that it comprises an iterative procedure for allocating an individual identification number to each apparatus newly connected to the network, a procedure consisting in:
    - transmitting, at least once, on the signalling line, a test message containing a first value of candidate number;
    - testing a new candidate number upon each refusal of the current candidate number by an apparatus already connected to the network and/or by supervision equipment of the said network;
    - in allocating the said candidate number to the said apparatus in the absence of a refusal.

11. Method according to Claim 9, characterized in that it comprises a procedure for requesting the establishment of a connection between a transmitting apparatus and a receiving apparatus on the said network, consisting in:
    - sending a connection request comprising the logic address of the sending apparatus and the logic address of the receiving apparatus;
    - obtaining, from each of the connection points of the said transmitter and receiver apparatuses, information on the existence of pairs of conductors, either already carrying the signals involved by the connection requested, or available in sufficient number for establishing the said requested connection;
    - establishing or aborting the said requested connection depending on the value of the said existence information.

12. Method of configuring a network according to Claim 6, especially for transmitting image signals in peritelevision, characterized in that the slow switching information of the said image signals is broadcast on the said signalling line.

13. Method of configuring a network according to Claim 6, characterized in that remote control information for a transmitter apparatus connected to the network is transmitted on the said signalling line.

14. Method according to Claim 9 or 13, characterized in that a level of priority is assigned to each apparatus and in that the connection establishment procedures, in the event of saturation of the network, favour the connections established on the basis of the level of priority of the highest-priority apparatus of each connection.

Fig.1

Fig. 2a

Fig. 2b

1 ligne spécialisée type D2BUS

TELEVISEUR COULEUR

40

16 lignes commutées

MATRICE DE COMMUTATION 16x16

SORTIE Vidéo composite

41

42

ENTREE Vidéo composite

43

ENTREE ou SORTIE
COMPOSANTE ROUGE

44

ENTREE ou SORTIE
COMPOSANTE VERT

45

ENTREE ou SORTIE
COMPOSANTE BLEU

46

ENTREE ou SORTIE
COMMUTATION RAPIDE

SORTIE AUDIO A

47

ENTREE AUDIO A

SORTIE AUDIO B

48

ENTREE AUDIO B

1 ligne de signalisation

ENTREE ou SORTIE
COMMUTATION LENTE

49

ORGANE DE
COMMANDE
ET DE
SIGNALISATION

50

14

MINITEL

20

Fig. 3

Fig. 4

Fig. 5

75

70

71

74

2ème étage

72

1er étage

75

75

73

RdC

Salle de Réunion

Salle de Réunion

Entrée
RVC

Local Technique

Fig. 6